# EUROPÄISCHE PATENTANMELDUNG

(11) **EP 4 717 676 A1**
(43) Veröffentlichungstag der Anmeldung: **01.04.2026**
(21) Anmeldenummer: 24202618.5
(22) Anmeldetag: 25.09.2024
(51) Int. Cl.: C02F 1/24, B03D 1/02, B03D 1/14, C02F 103/00

(54) **VERFAHREN UND MIKROFLOTATIONSANLAGE ZUR ENTFERNUNG VON VERUNREINIGUNGEN AUS EINEM GEWÄSSER**

(71) Anmelder: MicroBubbles GmbH, 04103 Leipzig (DE)
(72) Erfinder: Brackmann, Peter, 04103 Leipzig (DE); Frotscher, Seti, 04103 Leipzig (DE); Gruner, Martin, 04103 Leipzig (DE); Sander, Sebastian, 04103 Leipzig (DE); Damann, Roland, 04103 Leipzig (DE); Traphöner, Phillip, 04103 Leipzig (DE); Henning, Christian, 04103 Leipzig (DE)
(74) Vertreter: Hauck Patent- und Rechtsanwälte PartmbB

(57) **Zusammenfassung**

Verfahren zur Entfernung von Verunreinigungen aus einem Gewässer, insbesondere aus einem Regenbecken, mit den folgenden Schritten:
• Herstellen von Dispersionswasser durch Anreichern von Wasser unter erhöhtem Druck mit einem Gas,
• Einleiten des Dispersionswasser in das Gewässer über eine Dispersionswasserleitung, die eine Austrittsöffnung in einer vorgegebenen Wassertiefe aufweist, wobei es zur einer Druckentspannung kommt und eine Vielzahl von Mikroblasen entstehen, die sich an Verunreinigungen anlagern und an die Oberfläche des Gewässers aufsteigen, sodass sich an der Oberfläche ein Flotat bildet,
• Entfernen des Flotats mit einer Räumeinrichtung aus einem definierten Oberflächenbereich, wobei
• die Austrittsöffnung an einer festen Position des Gewässers angeordnet ist,
• das Gewässer in einer Umgebung der Austrittsöffnung eine Strömung mit einer Strömungsgeschwindigkeit und einer Strömungsrichtung aufweist, und
• der definierte Oberflächenbereich in einem Abstand in Strömungsrichtung von der Austrittsöffnung angeordnet ist.

## Beschreibung

Die Erfindung betrifft ein Verfahren zur Entfernung von Verunreinigungen aus einem Gewässer, insbesondere aus einem Regenbecken, und eine hierfür bestimmte Mikroflotationsanlage.

Mikroflotationsanlagen können in ganz unterschiedlichen Anwendungsfällen für eine effiziente Abtrennung von Verunreinigungen wie Feststoffpartikeln oder Öltröpfchen eingesetzt werden, zum Beispiel bei der Behandlung von Abwässern in der Industrie oder in Kläranlagen. Hierzu werden die Abwässer in ein speziell für die Mikroflotation vorgesehenes Flotationsbecken geleitet. Dem Flotationsbecken wird außerdem sogenanntes Dispersionswasser zugeführt, d. h. Wasser, das unter erhöhtem Druck mit Luft oder einem anderen Gas angereichert wurde. Das Gas ist in dem Dispersionswasser gelöst. Infolge einer Druckentspannung bei der Einleitung des Dispersionswassers in das Flotationsbecken entstehen unzählige Mikroblasen, die in dem Flotationsbecken langsam an die Oberfläche aufsteigen. Dabei lagern sich die Verunreinigungen an den Mikroblasen ab und werden ebenfalls an die Oberfläche transportiert, wo sich ein Flotat bildet. Dieses wird mit einer geeigneten Räumeinrichtung entfernt.

Ebenfalls bekannt sind schwimmende Mikroflotationsanlagen, die zur Reinigung eines Gewässers an der Oberfläche des Gewässers schwimmend angeordnet werden. In diesem Fall kann das Dispersionswasser statt in ein spezielles Flotationsbecken direkt in das Gewässer eingeleitet werden. Beispielsweise beschreibt die Druckschrift EP 3 647 272 A1 eine Flotationsanlage zur Reinigung eines Gewässers mit einer Barriere, die einen Oberflächenbereich des Gewässers umschließt, und einem Entspannungsventil, das unterhalb dieses Oberflächenbereichs angeordnet ist. Die bekannte Mikroflotationsanlage kann insbesondere freischwimmend auf dem Gewässer eingesetzt werden.

Davon ausgehend ist es die Aufgabe der Erfindung, ein Verfahren zur Entfernung von Verunreinigungen aus einem Gewässer und eine hierfür bestimmte Mikroflotationsanlage anzugeben, das bzw. die in einem Gewässer, das eine Strömung aufweist, einfacher und mit höherer Effizienz eingesetzt werden kann.

Diese Aufgabe wird gelöst durch das Verfahren mit den Merkmalen des Anspruchs 1 und durch die Mikroflotationsanlage mit den Merkmalen des Anspruchs 7. Vorteilhafte Ausgestaltungen sind in den sich jeweils anschließenden Unteransprüchen angegeben.

Das Verfahren dient zur Entfernung von Verunreinigungen aus einem Gewässer, insbesondere aus einem Regenbecken, und weist die folgenden Schritte auf:
- Herstellen von Dispersionswasser durch Anreichern von Wasser unter erhöhtem Druck mit einem Gas,
- Einleiten des Dispersionswasser in das Gewässer durch eine Dispersionswasserleitung, die eine Austrittsöffnung in einer vorgegebenen Wassertiefe aufweist, wobei es zur einer Druckentspannung kommt und eine Vielzahl von Mikroblasen entstehen, die sich an Verunreinigungen anlagern und an die Oberfläche des Gewässers aufsteigen, sodass sich an der Oberfläche ein Flotat bildet,
- Entfernen des Flotats mit einer Räumeinrichtung aus einem definierten Oberflächenbereich, wobei
- die Austrittsöffnung an einer festen Position des Gewässers angeordnet ist,
- das Gewässer in einer Umgebung der Austrittsöffnung eine Strömung mit einer Strömungsgeschwindigkeit und einer Strömungsrichtung aufweist, und
- der definierte Oberflächenbereich in einem Abstand in Strömungsrichtung von der Austrittsöffnung angeordnet ist.

Das Herstellen des Dispersionswassers kann in einem Drucksättiger erfolgen, d. h. in einem Druckbehälter, dem das Wasser und das darin zu lösende Gas zugeführt wird. Bevorzugt wird so viel Gas in dem Wasser gelöst, bis eine Sättigungskonzentration erreicht ist.

Das auf diese Weise hergestellte Dispersionswasser wird durch eine Dispersionswasserleitung in das Gewässer eingeleitet. Ein gesondertes Flotationsbecken wird nicht eingesetzt. Die Dispersionswasserleitung weist eine Austrittsöffnung auf, die sich in einer vorgegebenen Wassertiefe befindet. Die Wassertiefe, in der sich die Austrittsöffnung befindet, bezeichnet den Abstand der Austrittsöffnung von der Wasseroberfläche. Beim Einleiten des Dispersionswassers in das Gewässer kommt es insbesondere an einem in der Dispersionswasserleitung angeordneten Entspannungsventil zu einer Druckentspannung, sodass eine Vielzahl von Mikroblasen entstehen, die sich an Verunreinigungen anlagern und an die Oberfläche des Gewässers aufsteigen. Durch das Einhalten der vorgegebenen Wassertiefe wird auch bei stark schwankendem Wasserstand in dem Gewässer erreicht, dass die Mikroblasen auf ihrem Weg an die Oberfläche eine Mindeststrecke zurücklegen und dadurch solange unter Wasser bleiben, dass sich die Verunreinigungen gut an die Mikroblasen anlagern können. Die Austrittsöffnung kann von dem Entspannungsventil gebildet sein oder sich in einem Abstand davon befinden. Es versteht sich, dass mehrere Dispersionswasserleitungen und/oder mehrere Austrittsöffnungen gleichzeitig verwendet werden können. In diesem Fall können die mehrere Austrittsöffnungen zum Beispiel alle in derselben Wassertiefe angeordnet sein, insbesondere nebeneinander in einer Reihe quer zur Strömungsrichtung und/oder über eine Gesamtbreite des Gewässers gleichmäßig oder fast gleichmäßig verteilt.

An der Oberfläche des Gewässers bildet sich ein Flotat, das die abgetrennten Verunreinigungen enthält. Das Flotat wird mit einer Räumeinrichtung entfernt, die aufgrund ihrer Funktionsweise und konstruktiven Ausgestaltung einen definierten Oberflächenbereich des behandelten Gewässers erfasst. Das von der Räumeinrichtung entfernte Flotat kann in einen Sammelbehälter gefördert werden, der sich in dem Gewässer befinden kann, bevorzugt jedoch am Ufer des Gewässers angeordnet ist.

Bei der Erfindung ist die Austrittsöffnung an einer festen horizontalen Position des Gewässers angeordnet. Mit einer festen Position ist gemeint, dass sich die Austrittsöffnung insbesondere nicht mit der in dem Gewässer vorhandenen Strömung mitbewegt, sondern relativ zum Grund oder relativ zu einem Ufer des Gewässers unabhängig von der Strömung an einem festen Ort angeordnet ist. In dem Gewässer ist eine Strömung ausgebildet, insbesondere in einer Umgebung der Austrittsöffnung. Dort weist die Strömung eine Strömungsgeschwindigkeit und eine Strömungsrichtung auf. Strömungsgeschwindigkeit und -richtung hängen von der Art des Gewässers ab, aber auch von den aktuell herrschenden Umweltbedingungen. Handelt es sich bei dem Gewässer um einen Fluss oder einen Kanal, kann die Strömungsgeschwindigkeit relativ hoch sein. Sie hängt außerdem davon ab, wie viel Wasser der Fluss bzw. der Kanal zu dem gegebenen Zeitpunkt gerade führt. Im besonders relevanten Anwendungsfall eines Regenrückhaltebeckens, Regenklärbeckens oder Oberflächenwassersammelbeckens ergibt sich die Strömung in dem betreffenden Becken aus den zu- und ablaufenden Wassermengen. Sie unterliegt ebenso wie der Wasserstand in dem Becken teils extremen Schwankungen, insbesondere bei einem plötzlich einsetzenden Starkregenereignis. Das Becken kann eine als natürliches Becken verwendete Senke in der Landschaft sein, oder es kann künstlich angelegt sein. Im ersten Fall sind das Ufer und der Grund des Gewässers in der Regel unregelmäßig geformt. Bei einem künstlich angelegten Becken zum Beispiel aus Beton kann eine gleichmäßige Tiefe vorhanden sein. Der Rand eines solchen, künstlich hergestellten Beckens kann von geraden Wänden gebildet sein, die nachfolgend ebenso wie der unregelmäßig ausgebildete Rand eines natürlichen Gewässers als Ufer bezeichnet werden.

Eine Besonderheit der Erfindung besteht darin, dass der definierte Oberflächenbereich, der von der Räumeinrichtung erfasst wird, in einem Abstand von der Austrittsöffnung angeordnet ist, und zwar in einem Abstand in Strömungsrichtung. Dadurch wird erreicht, dass das durch die langsam an die Oberfläche aufsteigenden Mikroblasen gebildete Flotat, das wegen der Strömung unter Umständen in erheblichem, seitlichen Abstand von der Austrittsöffnung an der Oberfläche entsteht, zuverlässig von der Räumeinrichtung erfasst wird. Insbesondere wird vermieden, dass das Flotat oder Teile davon wieder absinken, bevor sie von der Räumeinrichtung entfernt werden können. Dadurch kann mit einer relativ einfachen Räumeinrichtung eine optimale Entfernung des Flotats erzielt werden. Insbesondere ist es nicht erforderlich, die gesamte Oberfläche des Gewässers oder einen Großteil davon mit der Räumeinrichtung zu erfassen, wie es bei herkömmlichen Flotationsbecken zum Beispiel unter Verwendung einer Kettenräumeinrichtung angestrebt wird. Mit einem Abstand in Strömungsrichtung ist gemeint, dass sich der definierte Oberflächenbereich bezogen auf die im Gewässer vorhandene Strömung stromabwärts der Austrittsöffnung befindet.

Versuche haben ergeben, dass bei guter Abstimmung der Anordnung des definierten Oberflächenbereichs relativ zur Austrittsöffnung in Gewässern mit einer Strömung sehr hohe Abscheideraten erzielt werden können. Eine auf dem Gewässer freischwimmende Mikroflotationsanlage hat sich demgegenüber als nachteilig erwiesen, insbesondere weil eine freischwimmende Mikroflotationsanlage zum einen aufgrund der Strömung schnell an ein stromabwärts gelegenes Ufer des Gewässers gelangt. Spätestens an diesem Punkt führt die Strömung dazu, dass das Flotat nicht oder nur unvollständig entfernt werden kann. Zum anderen ist bei einer frei in der Strömung treibenden Mikroflotationsanlage nicht sichergestellt, dass alle relevanten Bereiche des Gewässers von der Reinigungswirkung erfasst werden.

Bei dem erfindungsgemäßen Vorgehen kann die Austrittsöffnung an einer besonders geeigneten Position des Gewässers fest angeordnet werden und das resultierende Flotat kann weitgehend vollständig entfernt werden. Außerdem vereinfacht die feste Anordnung der Mikroflotationsanlage den Transport des entfernten Flotats zum Ufer.

In einer Ausgestaltung ist der Abstand so an die Strömungsgeschwindigkeit angepasst, dass ein Großteil der an die Oberfläche aufsteigenden Mikroblasen in den definierten Oberflächenbereich gelangt. Die Anpassung des Abstands kann experimentell vorgenommen werden, oder aus einer mittleren Aufstiegsgeschwindigkeit der Mikroblasen und der Strömungsgeschwindigkeit berechnet werden.

In einer Ausgestaltung ist das Gewässer ein Regenrückhaltebecken, ein Regenklärbecken oder ein Oberflächenwassersammelbecken. Wie erwähnt, kann es sich um ein natürliches oder künstlich angelegtes Becken handeln. Charakteristisch für alle genannten Becken sind die stark schwankenden Verschmutzungsgrade, Wasserstände und Strömungsverhältnisse. An diese kann das erfindungsgemäße Verfahren gut angepasst werden, sodass auch in dynamischen Situationen eine hohe Effizienz erzielt wird.

In einer Ausgestaltung wird die Strömungsgeschwindigkeit gemessen und der Abstand wird nach Maßgabe der gemessenen Strömungsgeschwindigkeit eingestellt. Dadurch wird auch bei wechselnden Strömungsgeschwindigkeiten eine optimale Anpassung des Abstands und damit eine hohe Effizienz erzielt.

In einer Ausgestaltung ist die vorgegebene Wassertiefe, in der die Austrittsöffnung angeordnet ist, einstellbar, wobei die vorgegebene Wassertiefe insbesondere nach Maßgabe einer mittleren Aufstiegsgeschwindigkeit der Mikroblasen eingestellt wird. Die Aufstiegsgeschwindigkeit der Mikroblasen hängt von vielen Faktoren ab, einerseits von der Größenverteilung der Mikroblasen, andererseits von der Beschaffenheit und Menge der anhaftenden Verunreinigungen und damit auch von der Belastung des Wassers mit Verunreinigungen. Die Strömungsgeschwindigkeit in dem Gewässer kann ebenfalls einen Einfluss haben, weil die Anzahl der Mikroblasen pro Volumen des Wassers durch die bei höherer Strömungsgeschwindigkeit schnellere Verteilung der Mikroblasen geringer ist und die Mikroblasen im Cluster wesentlich schneller aufsteigen als einzeln. Darum kann die vorgegebene Wassertiefe alternativ oder zusätzlich auch nach Maßgabe der Strömungsgeschwindigkeit eingestellt werden. Die mittlere Aufstiegsgeschwindigkeit der Mikroblasen kann experimentell bzw. im laufenden Betrieb der Mikroflotationsanlage ermittelt oder näherungsweise auf Grundlage eines oder mehrerer der genannten Einflussfaktoren berechnet werden. Die Einstellung der vorgegebenen Wassertiefe kann manuell oder mit einem geeigneten Stellantrieb automatisch erfolgen.

In einer Ausgestaltung ist in dem Gewässer zwischen der Austrittsöffnung und dem definierten Oberflächenbereich eine Prallplatte angeordnet. Die Prallplatte stellt eine Barriere für das aus der Austrittsöffnung austretende Dispersionswasser und die sich bildenden Mikroblasen dar. Eine quer zur Strömungsrichtung gemessene Breite der Prallplatte kann so gewählt werden, dass mindestens ein Großteil der von allen vorhandenen Austrittsöffnungen kommenden Mikroblasen in den Einflussbereich der Prallplatte gelangen. Insbesondere kann sich die Prallplatte über die gesamte Breite des Gewässers erstrecken. Versuche haben ergeben, dass die Prallplatte die räumliche Verteilung der entstehenden Mikroblasen wesentlich beeinflussen kann. Insbesondere kann bei geeigneter Anordnung der Prallplatte eine höhere Mikroblasenkonzentration, und eine höhere Kontaktwahrscheinlichkeit zwischen den Mikroblasen und einzelnen Partikeln erzielt werden. Beide Parameter haben wesentlichen Einfluss auf die Abscheideraten und damit auf die Effizienz des Verfahrens.

In einer Ausgestaltung wird die Strömungsgeschwindigkeit gemessen und die Anordnung der Prallplatte wird nach Maßgabe der gemessenen Strömungsgeschwindigkeit eingestellt. Mit der Anordnung der Prallplatte ist insbesondere ein Abstand der Prallplatte von der Austrittsöffnung, eine Wassertiefe, in der die Prallplatte angeordnet ist, eine Erstreckung der Prallplatte in horizontaler Richtung, eine Erstreckung der Prallplatte in vertikaler Richtung und/oder eine Neigung der Prallplatte relativ zur Vertikalen gemeint. Zwecks Anpassung der Erstreckung der Prallplatte in horizontaler oder vertikaler Richtung kann die Prallplatte mehrere, relativ zueinander verschiebliche Prallplattenelemente aufweisen. Versuche haben ergeben, dass durch Anpassung der Anordnung der Prallplatte an die gemessene Strömungsgeschwindigkeit weitere Effizienzsteigerungen möglich sind. Es wird vermutet, dass die Verbesserungen darin begründet sind, dass insbesondere bei hohen Strömungsgeschwindigkeiten durch geeignete Anordnung der Prallplatte vermieden wird, dass das aus der Austrittsöffnung austretende Dispersionswasser zu schnell und zu weiträumig in dem Gewässer verteilt wird. Diese Verteilung geht mit einer Verdünnung des Dispersionswassers einher und kann zur Folge haben, dass sich die Anzahl der entstehenden Mikroblasen wesentlich verringert.

Die Mikroflotationsanlage mit den Merkmalen des Anspruchs 7 dient zur Entfernung von Verunreinigungen aus einem Gewässer, insbesondere aus einem Regenbecken, und weist folgendes auf:
- eine Einrichtung zur Herstellung von Dispersionswasser durch Anreichern von Wasser unter erhöhtem Druck mit einem Gas,
- eine Dispersionswasserleitung, die von der Einrichtung zur Herstellung von Dispersionswasser zu einer Austrittsöffnung führt,
- eine Räumeinrichtung,
- eine erste Positionierungseinrichtung, an der die Dispersionswasserleitung so befestigt ist, dass sich die Austrittsöffnung an einer festen Position des Gewässers und in einer vorgegebenen Wassertiefe befindet, und
- eine zweite Positionierungseinrichtung, an der die Räumeinrichtung befestigt ist, sodass die Räumeinrichtung an einer festen Position des Gewässers angeordnet ist und einen definierten Oberflächenbereich an der Oberfläche des Gewässers erfasst, wobei der definierte Oberflächenbereich in einem Abstand in einer Strömungsrichtung des Gewässers von der Austrittsöffnung angeordnet ist.

Die Mikroflotationsanlage ist insbesondere zur Ausführung des erläuterten Verfahrens geeignet. Zu den Merkmalen und Vorteilen der Mikroflotationsanlage wird darum auf die vorstehenden Ausführungen verwiesen, die entsprechend gelten. Die besondere Anordnung von Austrittsöffnung und Räumeinrichtung wird bei der Mikroflotationsanlage dadurch erreicht, dass die Mikroflotationsanlage zwei Positionierungseinrichtungen aufweist, mit denen die Anordnung der Austrittsöffnung bzw. der Räumeinrichtung in dem Gewässer so vorgegeben werden kann, dass sich zwischen dem definierten Oberflächenbereich und der Austrittsöffnung der Abstand in Strömungsrichtung befindet. Die Positionierungseinrichtungen stimmen die Anordnung der Austrittsöffnung und der Räumeinrichtung in vertikale Richtung auf den Wasserstand in dem Gewässer ab und sorgen so dafür, dass sich die Austrittsöffnung in der vorgegebenen Wassertiefe und die Räumeinrichtung an der Oberfläche des Gewässers befindet. Dies gelingt zum Beispiel durch die nachfolgend erläuterten Schwimmkörper. Alternativ ist eine Erfassung des Wasserstands in dem Gewässer möglich und eine Einstellung der vertikalen Positionen mit einem z.B. hydraulischen oder elektrischen Stellantrieb. Der Stellantrieb kann zum Beispiel am Ufer oder am Grund des Gewässers verankert sein.

In einer Ausgestaltung weist
- die erste Positionierungseinrichtung eine erste schwimmfähige Einheit auf, an der die Dispersionswasserleitung befestigt ist, und eine erste Befestigungseinrichtung, die mit der ersten schwimmfähigen Einheit verbunden ist, und/oder
- die zweite Positionierungseinrichtung eine zweite schwimmfähige Einheit, an der die Räumeinrichtung befestigt ist, und eine zweite Befestigungseinrichtung, die mit der zweiten schwimmfähigen Einheit verbunden ist.

An der ersten schwimmfähigen Einheit ist die Dispersionswasserleitung befestigt, wodurch sich diese auch bei wechselndem Wasserstand in dem Gewässer stets in einer vorgegebenen Wassertiefe befindet. Die Räumeinrichtung ist an der zweiten schwimmfähigen Einheit befestigt und ist darum ebenfalls geeignet zur Oberfläche des Gewässers positioniert. Die erste schwimmfähige Einheit wird durch eine erste Befestigungseinrichtung an einer festen Position des Gewässers gehalten. Sie bewegt sich daher mit der im Gewässer ausgebildeten Strömung nicht mit. Für die feste Position der zweiten schwimmfähigen Einheit mit der Räumeinrichtung ist eine zweite Befestigungseinrichtung vorgesehen. Die Befestigung der beiden schwimmfähigen Einheiten führt dazu, dass der von der Räumeinrichtung erfasste, definierte Oberflächenbereich in einem Abstand in einer Strömungsrichtung des Gewässers von der Austrittsöffnung angeordnet ist.

In einer Ausgestaltung ist die erste Befestigungseinrichtung und/oder die zweite Befestigungseinrichtung an einem Ufer des Gewässers oder an einem Grund des Gewässers verankert. Mindestens eine der beiden Befestigungseinrichtungen ist am Ufer oder Grund des Gewässers verankert, um die feste Anordnung der damit unmittelbar verbundenen, ersten oder zweiten schwimmfähigen Einheit zu gewährleisten. Die andere Befestigungseinrichtung, die der anderen schwimmfähigen Einheit zugeordnet ist, kann ebenfalls an einem Ufer oder an einem Grund des Gewässers verankert sein, alternativ ist eine Befestigung an der ersten (oder zweiten) Befestigungseinrichtung oder an der ersten (oder zweiten) schwimmfähigen Einheit möglich. In jedem Fall sorgen die beiden Befestigungseinrichtungen dafür, dass beide schwimmfähigen Einheiten strömungsunabhängig fest an der Oberfläche des Gewässers angeordnet sind und der Abstand zwischen der Austrittsöffnung und dem definierten Oberflächenbereich eingehalten wird.

In einer Ausgestaltung ist die Einrichtung zur Herstellung von Dispersionswasser am Ufer des Gewässers aufgestellt oder an der ersten Positionierungseinrichtung, z.B. an der ersten schwimmfähigen Einheit, befestigt. Beispielsweise kann die erste schwimmfähige Einheit einen Schwimmsteg aufweisen, auf dem die Einrichtung zur Herstellung von Dispersionswasser angeordnet ist. Wegen der festen Anordnung der ersten schwimmfähigen Einheit kann die Einrichtung zur Herstellung von Dispersionswasser auch problemlos am Ufer aufgestellt werden und die Dispersionswasserleitung kann von dort zu der Austrittsöffnung verlaufen. Ein besonderer Vorteil dieser Lösung ist, dass die auf dem Gewässer angeordneten Elemente der Mikroflotationsanlage besonders kompakt sind die Strömung in dem Gewässer weniger beeinträchtigen.

In einer Ausgestaltung weist die Mikroflotationsanlage eine Messeinrichtung für eine Strömungsgeschwindigkeit des Gewässers auf. Auf Grundlage der von der Messeinrichtung erfassten Strömungsgeschwindigkeit kann insbesondere der Abstand vorgegeben werden.

In einer Ausgestaltung weist die erste Positionierungseinrichtung und/oder die zweite Positionierungseinrichtung einen Stellantrieb auf, mit dem die Position der Austrittsöffnung in dem Gewässer, die vorgegebene Wassertiefe, in der die Austrittsöffnung angeordnet ist, und/oder die Position der Räumeinrichtung in dem Gewässer verändert werden kann. Dadurch kann insbesondere der Abstand zwischen Austrittsöffnung und definiertem Oberflächenbereich eingestellt werden.

In einer Ausgestaltung weist die Mikroflotationsanlage eine Steuerung auf, die mit der Messeinrichtung und dem Stellantrieb verbunden und dazu ausgebildet ist, den Abstand zwischen der Austrittsöffnung und dem definierten Oberflächenbereich nach Maßgabe einer gemessenen Strömungsgeschwindigkeit einzustellen und/oder die mit dem Stellantrieb verbunden und dazu ausgebildet ist, die vorgegebene Wassertiefe, in der die Austrittsöffnung angeordnet ist, nach Maßgabe einer mittleren Aufstiegsgeschwindigkeit der Mikroblasen einzustellen. Auf diese Weise kann die Einhaltung des optimalen Abstands automatisch sichergestellt werden.

In einer Ausgestaltung weist die Mikroflotationsanlage eine Prallplatte auf, die in dem Gewässer zwischen der Austrittsöffnung und dem definierten Oberflächenbereich angeordnet ist. In einer weiteren Ausgestaltung weist die Mikroflotationsanlage einen Stellantrieb für die Prallplatte auf, mit dem die Anordnung der Prallplatte, insbesondere ein Abstand der Prallplatte von der Austrittsöffnung, eine Wassertiefe, in der die Prallplatte angeordnet ist, eine Erstreckung der Prallplatte in horizontaler Richtung, eine Erstreckung der Prallplatte in vertikaler Richtung und/oder eine Neigung der Prallplatte relativ zur Vertikalen einstellbar ist, wobei die Steuerung mit dem Stellantrieb für die Prallplatte verbunden und dazu ausgebildet ist, die Anordnung der Prallplatte nach Maßgabe einer gemessenen Strömungsgeschwindigkeit einzustellen. Hierzu wird auf die vorstehenden Erläuterungen des entsprechend ausgestalteten Verfahrens verwiesen.

In einer Ausgestaltung weist die Räumeinrichtung eine Absaugeinrichtung mit mindestens einer Absaugöffnung auf oder mindestens einen Schneckenförderer, wobei der von der Räumeinrichtung erfasste Oberflächenbereich durch die Anordnung der mindestens einen Absaugöffnung bzw. des mindestens einen Schneckenförderers definiert ist. In beiden Fällen wird der definierte Oberflächenbereich durch die Anordnung und konstruktive Ausgestaltung der Räumeinrichtung vorgegeben.

Nachfolgend wird die Erfindung anhand von Figuren näher erläutert. Es zeigen:
- Fig. 1: eine Mikroflotationsanlage in einem Regenrückhaltebecken in einer schematischen Ansicht von der Seite,
- Fig. 2: die Mikroflotationsanlage aus Figur 1 in einer schematischen Ansicht von oben,
- Fig. 3: eine weitere Mikroflotationsanlage in einem Regenrückhaltebecken in einer schematischen Ansicht von der Seite, und
- Fig. 4: die Mikroflotationsanlage aus Figur 3 in einer schematischen Ansicht von oben.

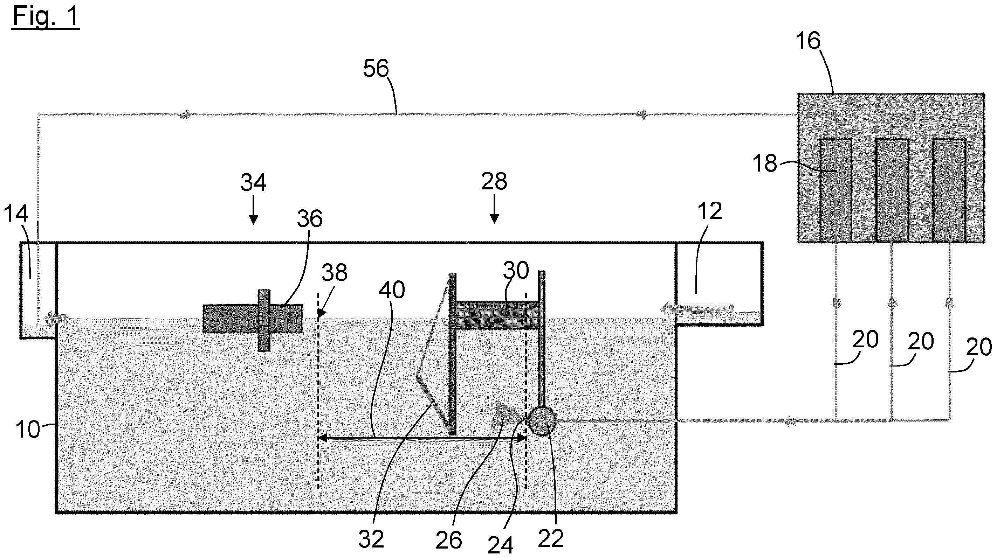

Figur 1 zeigt ein Regenrückhaltebecken 10 mit einem Zulauf 12 und einem Ablauf 14. Durch das über Zu- und Ablauf zu- und ablaufende Wasser bildet sich innerhalb des Regenrückhaltebeckens eine Strömung aus, die in der Figur 1 von rechts nach links strömt. In dem Zulauf 12 wird das aus mehreren Quellen kommende Oberflächenwasser zusammengeführt und gemeinsam in das Regenrückhaltebecken 10 eingeleitet.

Am Ufer des Regenrückhaltebeckens 10 befindet sich eine Einrichtung 16 zum Herstellen von Dispersionswasser, die im Beispiel drei Druckbehälter 18 aufweist. Über eine Leitung 56 wird aus dem Ablauf 14 des Regenrückhaltebeckens 10 entnommenes Wasser in die Druckbehälter 18 eingeleitet. Zusätzlich wird Luft zugeführt (nicht dargestellt) und in den Druckbehältern 18 unter erhöhtem Druck in dem Wasser gelöst. Das auf diese Weise hergestellte Dispersionswasser gelangt über drei Dispersionswasserleitungen 20, die jeweils eine Entspannungsventilanordnung 22 aufweisen, zu drei Austrittsöffnungen 24, die jeweils an einem Ausgang der jeweiligen Entspannungsventilanordnung 22 angeordnet sind. Stromabwärts der Austrittsöffnungen 24 bilden sich unter Druckentspannung unzählige Mikroblasen 26, was in Fig. 1 durch einen Kegel dargestellt ist.

Jede der Entspannungsventilanordnungen 22 mit der zugehörigen Austrittsöffnung 24 ist an einer ersten schwimmfähigen Einheit 28, die einen begehbaren Steg 30 aufweist, befestigt. Ebenfalls an der ersten schwimmfähigen Einheit 28 befestigt ist eine Prallplatte 32, deren Anordnung verstellbar ist. Durch die Befestigung der Entspannungsventilanordnungen 22 mit den Austrittsöffnungen 24 an der ersten schwimmfähigen Einheit 28 befinden sich die Austrittsöffnungen 24 stets in einer vorgegebenen Wassertiefe, unabhängig vom Füllstand des Regenrückhaltebeckens 10.

Ebenfalls gezeigt es eine zweite schwimmfähige Einheit 34, die eine Räumeinrichtung 36 aufweist. Die Räumeinrichtung 36 erfasst einen definierten Oberflächenbereich 38 und ist dazu ausgebildet, ein an der Oberfläche ausgebildetes Flotat aus diesem definierten Oberflächenbereich 38 zu entfernen.

Zwischen der Austrittsöffnung 24 und dem definierten Oberflächenbereich 38 ist in Strömungsrichtung ein Abstand 40 ausgebildet, der definierte Oberflächenbereich 38 befindet sich bezüglich der in dem Regenrückhaltebecken 10 ausgebildeten Strömung stromabwärts von der Austrittsöffnung 24.

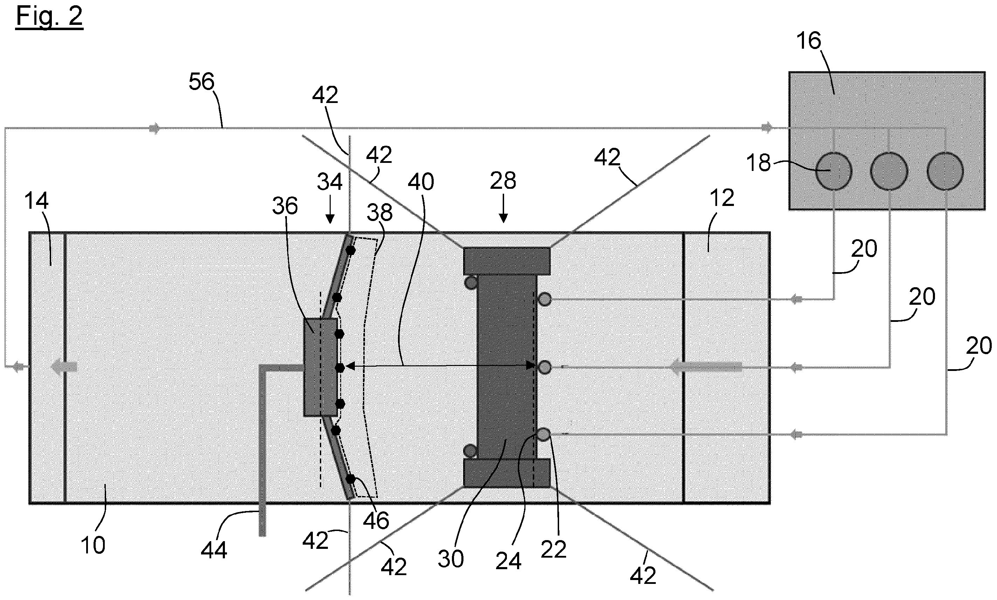

In Fig. 2 sind die bereits erläuterten Elemente mit denselben Bezugszeichen versehen wie in Fig. 1. Zusätzlich erkennbar ist eine erste Befestigungseinrichtung mit vier Seilen 42, mit denen die erste schwimmfähige Einheit 28 beidseitig mit dem Ufer des Regenrückhaltebeckens verspannt ist. Die zweite schwimmfähige Einheit 34 ist mit zwei Seilen 42 ebenfalls zu beiden Seiten mit dem Ufer des Regenrückhaltebeckens 10 verspannt und dadurch in ihrer Position im Gewässer fixiert. Die Räumeinrichtung 36 weist eine zum Ufer des Regenrückhaltebeckens 10 geführte Flotatleitung 44 auf. Mehrere Absaugöffnungen 46 der Räumeinrichtung 36 sind annähernd über die gesamte Breite des Regenrückhaltebeckens 10 verteilt angeordnet. Der sich daraus ergebende, von der Räumeinrichtung 36 erfasste, definierte Oberflächenbereich 38 ist streifenförmig ausgebildet und befindet sich in einem Abstand 40 von den Austrittsöffnungen 24 der drei Entspannungsventilanordnungen 22.

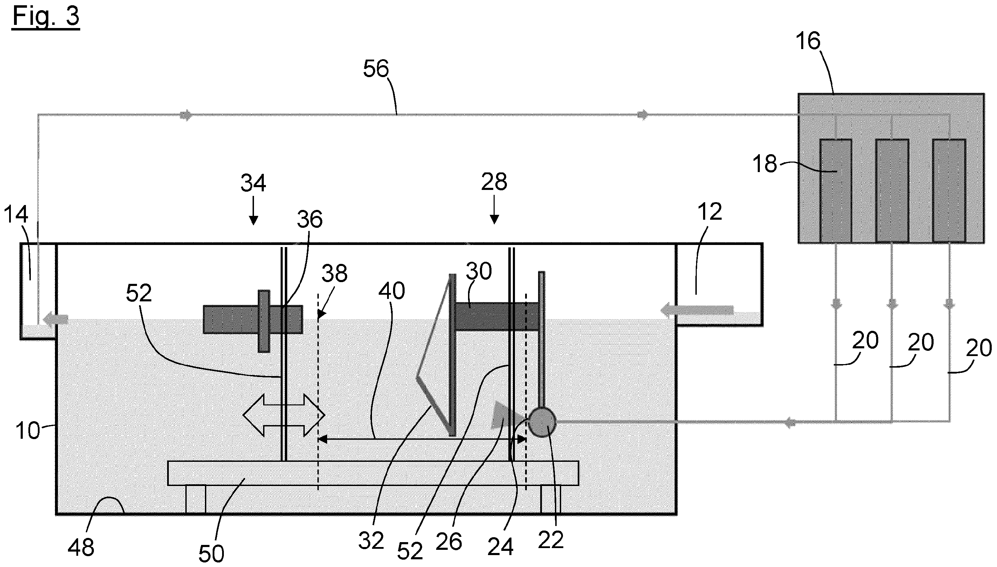

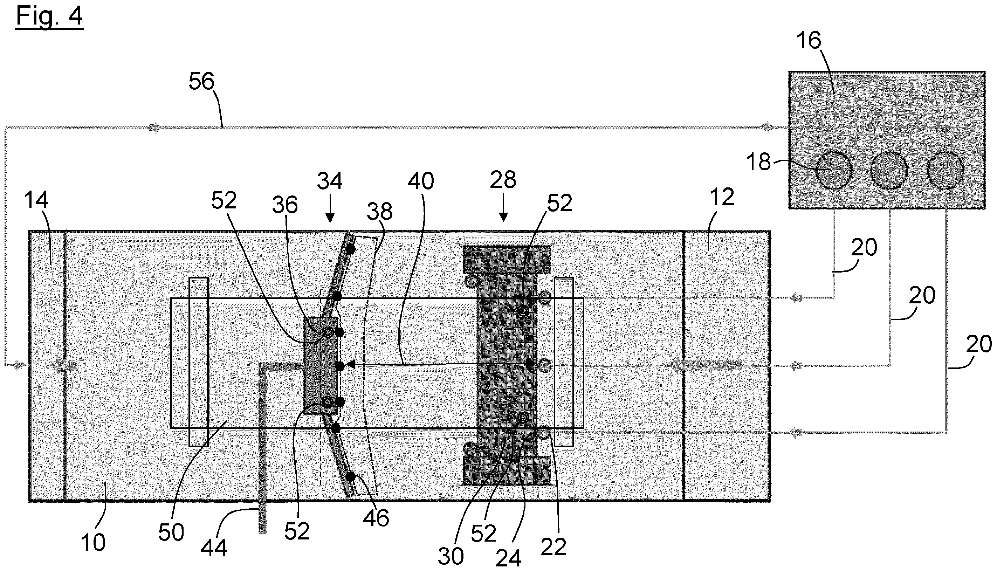

In den Fign. 3 und 4 ist eine Alternative zu der Anordnung aus den Fign. 1 und 2 gezeigt, die sich hinsichtlich der ersten und zweiten Befestigungseinrichtungen unterscheidet. Am Grund 48 des Regenrückhaltebeckens 10 ist ein Sockel 50 verankert. Eine erste Befestigungseinrichtung für die erste schwimmfähige Einheit 28 weist zwei an dem Sockel 50 befestigte, vertikal nach oben weisende Stangen 52 auf, die durch Öffnungen in der ersten schwimmfähigen Einheit 28 hindurchgeführt sind. Sie fixieren die Position der ersten schwimmfähigen Einheit 28, ohne deren Auf- und Abbewegung bei wechselndem Wasserstand im Regenrückhaltebecken 10 zu beeinträchtigen.

Die zweite schwimmfähige Einheit 34 ist ebenfalls über zwei Stangen 52 am Sockel 50 befestigt, wobei die Position dieser Stangen 52 in Strömungsrichtung durch einen Stellantrieb (nicht dargestellt) eingestellt werden kann, wie durch den Doppelpfeil 54 angedeutet.

In Fig. 4 erkennt man, dass bei der beschriebenen Verankerung der beiden schwimmfähigen Einheiten 28, 34 am Grund 48 des Regenrückhaltebeckens 10 auf eine Abspannung mit Seilen zu den Ufern des Regenrückhaltebeckens 10 verzichtet werden kann.

### Liste der Bezugszeichen

- 10: Regelrückhaltebecken
- 12: Zulauf
- 14: Ablauf
- 16: Einrichtung zum Herstellen von Dispersionswasser
- 18: Druckbehälter
- 20: Dispersionswasserleitung
- 22: Entspannungsventilanordnung
- 24: Austrittsöffnung
- 26: Mikroblasen
- 28: erste schwimmfähige Einheit
- 30: Steg
- 32: Prallplatte
- 34: zweite schwimmfähige Einheit
- 36: Räumeinrichtung
- 38: definierter Oberflächenbereich
- 40: Abstand
- 42: Seil
- 44: Flotatleitung
- 46: Ansaugöffnung
- 48: Grund
- 50: Sockel
- 52: Stange
- 54: Doppelpfeil
- 56: Leitung

## Patentansprüche

1. Verfahren zur Entfernung von Verunreinigungen aus einem Gewässer, insbesondere aus einem Regenbecken, mit den folgenden Schritten:
• Herstellen von Dispersionswasser durch Anreichern von Wasser unter erhöhtem Druck mit einem Gas,
• Einleiten des Dispersionswassers in das Gewässer durch eine Dispersionswasserleitung (20), die eine Austrittsöffnung (24) in einer vorgegebenen Wassertiefe aufweist, wobei es zur einer Druckentspannung kommt und eine Vielzahl von Mikroblasen (26) entstehen, die sich an Verunreinigungen anlagern und an die Oberfläche des Gewässers aufsteigen, sodass sich an der Oberfläche ein Flotat bildet,
• Entfernen des Flotats mit einer Räumeinrichtung (36) aus einem definierten Oberflächenbereich (38), **dadurch gekennzeichnet, dass**
• die Austrittsöffnung (24) an einer festen Position des Gewässers angeordnet ist,
• das Gewässer in einer Umgebung der Austrittsöffnung (24) eine Strömung mit einer Strömungsgeschwindigkeit und einer Strömungsrichtung aufweist, und
• der definierte Oberflächenbereich (38) in einem Abstand (40) in Strömungsrichtung von der Austrittsöffnung (24) angeordnet ist.

2. Verfahren nach Anspruch 2, **dadurch gekennzeichnet, dass** der Abstand (40) so an die Strömungsgeschwindigkeit angepasst ist, dass ein Großteil der an die Oberfläche aufsteigenden Mikroblasen (26) in den definierten Oberflächenbereich (38) gelangt.

3. Verfahren nach Anspruch 1 oder 2, **dadurch gekennzeichnet, dass** das Gewässer ein Regenrückhaltebecken (10), ein Regenklärbecken oder ein Oberflächenwassersammelbecken ist.

4. Verfahren nach einem der Ansprüche 1 bis 3, **dadurch gekennzeichnet, dass** die Strömungsgeschwindigkeit gemessen und der Abstand (40) nach Maßgabe der gemessenen Strömungsgeschwindigkeit eingestellt wird.

5. Verfahren nach einem der Ansprüche 1 bis 4, **dadurch gekennzeichnet, dass** die vorgegebene Wassertiefe, in der die Austrittsöffnung angeordnet ist, einstellbar ist, wobei die vorgegebene Wassertiefe insbesondere nach Maßgabe einer mittleren Aufstiegsgeschwindigkeit der Mikroblasen eingestellt wird.

6. Verfahren nach einem der Ansprüche 1 bis 5, **dadurch gekennzeichnet, dass** in dem Gewässer zwischen der Austrittsöffnung (24) und dem definierten Oberflächenbereich (38) eine Prallplatte (32) angeordnet ist, wobei insbesondere die Strömungsgeschwindigkeit gemessen und die Anordnung der Prallplatte (32), insbesondere ein Abstand der Prallplatte (32) von der Austrittsöffnung (24), eine Wassertiefe, in der die Prallplatte (32) angeordnet ist, eine Erstreckung der Prallplatte (32) in horizontaler Richtung, eine Erstreckung der Prallplatte (32) in vertikaler Richtung und/oder eine Neigung der Prallplatte (32) relativ zur Vertikalen nach Maßgabe der gemessenen Strömungsgeschwindigkeit eingestellt wird.

7. Mikroflotationsanlage zur Entfernung von Verunreinigungen aus einem Gewässer, insbesondere aus einem Regenbecken, wobei die Mikroflotationsanlage folgendes aufweist:
• eine Einrichtung (16) zur Herstellung von Dispersionswasser durch Anreichem von Wasser unter erhöhtem Druck mit einem Gas,
• eine Dispersionswasserleitung (20), die von der Einrichtung (16) zur Herstellung von Dispersionswasser zu einer Austrittsöffnung (24) führt, und
• eine Räumeinrichtung (36), **gekennzeichnet durch**
• eine erste Positionierungseinrichtung, an der die Dispersionswasserleitung (20) so befestigt ist, dass sich die Austrittsöffnung (24) an einer festen Position des Gewässers und in einer vorgegebenen Wassertiefe befindet,
• eine zweite Positionierungseinrichtung, an der die Räumeinrichtung (36) befestigt ist, sodass die Räumeinrichtung (36) an einer festen Position des Gewässers angeordnet ist und einen definierten Oberflächenbereich (38) an der Oberfläche des Gewässers erfasst, wobei der definierte Oberflächenbereich (38) in einem Abstand (40) in einer Strömungsrichtung des Gewässers von der Austrittsöffnung (24) angeordnet ist.

8. Mikroflotationsanlage nach Anspruch 7, **dadurch gekennzeichnet, dass**
• die erste Positionierungseinrichtung eine erste schwimmfähige Einheit (28) aufweist, an der die Dispersionswasserleitung (20) befestigt ist, und eine erste Befestigungseinrichtung, die mit der ersten schwimmfähigen Einheit (28) verbunden ist, und/oder
• die zweite Positionierungseinrichtung eine zweite schwimmfähige Einheit (34) aufweist, an der die Räumeinrichtung (36) befestigt ist, und eine zweite Befestigungseinrichtung, die mit der zweiten schwimmfähigen Einheit (34) verbunden ist.

9. Mikroflotationsanlage nach Anspruch 8, **dadurch gekennzeichnet, dass** die erste Befestigungseinrichtung und/oder die zweite Befestigungseinrichtung an einem Ufer des Gewässers oder an einem Grund (48) des Gewässers verankert ist.

10. Mikroflotationsanlage nach einem der Ansprüche 7 bis 9, **dadurch gekennzeichnet, dass** die Einrichtung (16) zur Herstellung von Dispersionswasser am Ufer des Gewässers aufgestellt oder an der ersten Positionierungseinrichtung befestigt ist.

11. Mikroflotationsanlage nach einem der Ansprüche 7 bis 10, **dadurch gekennzeichnet, dass** die Mikroflotationsanlage eine Messeinrichtung für eine Strömungsgeschwindigkeit des Gewässers aufweist.

12. Mikroflotationsanlage nach einem der Ansprüche 7 bis 11, **dadurch gekennzeichnet, dass** die erste Positionierungseinrichtung und/oder die zweite Positionierungseinrichtung einen Stellantrieb aufweist, mit dem die Position der der Austrittsöffnung (24) in dem Gewässer, die vorgegebene Wassertiefe, in der die Austrittsöffnung (24) angeordnet ist, und/oder die Position der Räumeinrichtung (36) in dem Gewässer verändert werden kann.

13. Mikroflotationsanlage nach Anspruch 12, **dadurch gekennzeichnet, dass** die Mikroflotationsanlage eine Steuerung aufweist, die mit der Messeinrichtung und dem Stellantrieb verbunden und dazu ausgebildet ist, den Abstand (40) zwischen der Austrittsöffnung (24) und dem definierten Oberflächenbereich (38) nach Maßgabe einer gemessenen Strömungsgeschwindigkeit einzustellen und/oder die mit dem Stellantrieb verbunden und dazu ausgebildet ist, die vorgegebene Wassertiefe, in der die Austrittsöffnung (24) angeordnet ist, nach Maßgabe einer mittleren Aufstiegsgeschwindigkeit der Mikroblasen einzustellen.

14. Mikroflotationsanlage nach einem der Ansprüche 7 bis 13, **dadurch gekennzeichnet, dass** die Mikroflotationsanlage eine Prallplatte (32) aufweist, die in dem Gewässer zwischen der Austrittsöffnung (24) und dem definierten Oberflächenbereich (38) angeordnet ist, wobei die die Mikroflotationsanlage insbesondere einen Stellantrieb für die Prallplatte (32) aufweist, mit dem die Anordnung der Prallplatte (32), insbesondere ein Abstand der Prallplatte (32) von der Austrittsöffnung (24), eine Wassertiefe, in der die Prallplatte (32) angeordnet ist, eine Erstreckung der Prallplatte (32) in horizontaler Richtung, eine Erstreckung der Prallplatte (32) in vertikaler Richtung und/oder eine Neigung der Prallplatte (32) relativ zur Vertikalen einstellbar ist, wobei die Steuerung mit dem Stellantrieb für die Prallplatte (32) verbunden und dazu ausgebildet ist, die Anordnung der Prallplatte (32) nach Maßgabe einer gemessenen Strömungsgeschwindigkeit einzustellen.

15. Mikroflotationsanlage nach einem der Ansprüche 7 bis 14, **dadurch gekennzeichnet, dass** die Räumeinrichtung (36) eine Absaugeinrichtung mit mindestens einer Absaugöffnung (46) aufweist oder mindestens einen Schneckenförderer, wobei der von der Räumeinrichtung (36) erfasste Oberflächenbereich (38) durch die Anordnung der mindestens einen Absaugöffnung (46) bzw. des mindestens einen Schneckenförderers definiert ist.
